**Europäisches Patentamt**

**European Patent Office**

**Office européen des brevets**

(11) Veröffentlichungsnummer : **0 401 159 B1**

(12) **EUROPÄISCHE PATENTSCHRIFT**

(45) Veröffentlichungstag der Patentschrift :
**15.07.92 Patentblatt 92/29**

(51) Int. Cl.⁵ : **F16B 13/06**

(21) Anmeldenummer : **90810354.2**

(22) Anmeldetag : **11.05.90**

(54) **Kunststoff-Spreizdübel.**

(30) Priorität : **30.05.89 DE 3917498**

(43) Veröffentlichungstag der Anmeldung :
**05.12.90 Patentblatt 90/49**

(45) Bekanntmachung des Hinweises auf die
Patenterteilung :
**15.07.92 Patentblatt 92/29**

(84) Benannte Vertragsstaaten :
**AT CH DE FR GB LI SE**

(56) Entgegenhaltungen :
**AT-B- 248 080**
**DE-A- 3 308 755**

(73) Patentinhaber : **HILTI Aktiengesellschaft**
**FL-9494 Schaan (LI)**

(72) Erfinder : **Bisping, Heinz**
**Wallgauer Weg 3c**
**W-8900 Augsburg (DE)**

(74) Vertreter : **Wildi, Roland**
**Hilti Aktiengesellschaft Patentabteilung**
**FL-9494 Schaan (LI)**

## Beschreibung

Die Erfindung betrifft einen Kunststoff-Spreizdübel, mit einem von einem Spreizelement aufweitbaren Spreizteil, das aus einem einführrichtungsseitigen, in Einführrichtung zwei offene Längsschlitze aufweisenden ersten Spreizabschnitt mit zylindrischer Aussenkontur und einem entgegen der Einführrichtung daran anschliessenden zweiten Spreizabschnitt, der beidseitig einer entgegen der Einführrichtung offenen Zentralöffnung einander gegenüberliegende, wellenförmig und zueinander gegensinnig verlaufende Längsschlitze aufweist, besteht, wobei zwischen den Spreizabschnitten eine umlaufende, nach aussen offene Einschnürung vorgesehen ist.

Kunststoff-Spreizdübel können in unterschiedliche Aufnahmematerialien gesetzt werden. Die Dübel werden hierzu in eine Aufnahmebohrung eingeführt und mittels eines Spreizelementes, zumeist einer Schraube, in der Aufnahmebohrung durch Aufweiten verspreizt.

Der beispielsweise aus der DE-A 33 08 755 bekannte Spreizdübel verfügt über ein Spreizteil, an das sich entgegen der Einführrichtung ein Hals anschliesst. Das Spreizteil besteht aus einem einführrichtungsseitigen ersten Spreizabschnitt und einem entgegen der Einführrichtung daran anschliessenden zweiten Spreizabschnitt. Der zweite Spreizabschnitt weist wellenförmige, zueinander gegensinnig verlaufende Längsschlitze auf, wodurch eine zuverlässige seitliche Führung des Spreizelementes beim Eintreiben in den zweiten Spreizabschnitt erreicht wird. In Einführrichtung schliessen in Verlängerung an die wellenförmigen Längsschlitze zwei den ersten Spreizabschnitt in Einführrichtung durchsetzende Längschlitze an. Diese Längsschlitzung des Spreizteiles führt beim Setzvorgang zu einer Aufspaltung in zwei Schalenkörper.

Dieser bekannte Spreizdübel ist besonders für harte Aufnahmematerialien, wie beispielsweise Beton oder Gestein, geeignet.

Der Erfindung liegt die Aufgabe zugrunde, einen Spreizdübel zu schaffen, mit dem insbesondere in weichen Materialien wie Gasbeton hohe Verankerungswerte erzielt werden.

Erfindungsgemäss wird die Aufgabe dadurch gelöst, dass die Länge des ersten Spreizabschnittes mindestens einem Drittel der Länge des Spreizteiles entspricht, die wellenförmigen Längsschlitze zu den Längschlitzen im ersten Spreizabschnitt in Umfangsrichtung versetzt sind und dass die Zentralöffnung sich im zweiten Spreizabschnitt in Einführrichtung verjüngt, wobei die grösste lichte Weite der Zentralöffnung dem 0,4-bis 0,7-fachen des Aussendurchmessers des ersten Spreizabschnittes entspricht.

Durch die Versetzung der Längsschlitze im ersten Spreizabschnitt zu den Längschlitzen im zweiten Spreizabschnitt in Umfangsrichtung ist in Verlängerung jedes Längsschlitzes der axial jeweils angrenzende erste bzw zweite Spreizabschnitt nicht geschlitzt. Dadurch ist das Spreizteil im Bereich der Uebergangszone zwischen den beiden Spreizabschnitten in Umfangsrichtung geschlossen. Das in den Dübel einlaufende Spreizelement weitet somit einerseits den zweiten Spreizabschnitt und andererseits, durch die in Umfangsrichtung geschlossene Ausbildung, getrennt dazu, den zweiten Spreizabschnitt auf. Das Spreizteil bleibt auf diese Weise verwindungssteif und gewährleistet insbesondere eine zentrische Führung des Spreizelementes, indem trotz Aufspaltung des ersten Spreizabschnittes in zwei Schalenhälften die Führung des Spreizelementes im zweiten Spreizabschnitt beibehalten wird.

Da die Längsschlitze im ersten Spreizabschnitt in Einführrichtung offen sind, wird dieser Spreizabschnitt vom Spreizelement in Einführrichtung maulartig geweitet, wobei die nach aussen offene Einschnürung zwischen den Spreizabschnitten eine dieses Aufweiten begünstigende Gelenkstelle schafft. Die Versetzung der Längsschlitze führt aber auch dazu, dass die Spreizabschnitte zueinander in Umfangsrichtung radial versetzt aufgeweitet werden, was zu einem verdrehungsfesten Sitz des Dübels beiträgt.

Der maulartig sich aufweitende erste Spreizabschnitt wird vom Spreizelement in das Aufnahmematerial eingedrückt und legt sich so formschlüssig fest. Durch eine einem Drittel der Länge des Spreizteiles entsprechende Länge des ersten Spreizabschnittes kommt eine für hohe Verankerungswerte ausreichende Aufweitung zustande. Zur Erzielung eines hohen Verankerungswertes trägt der zweite Spreizabschnitt dadurch bei, dass sich die Zentralöffnung in Einführrichtung verjüngt. Dadurch wird dieser Spreizabschnitt vom Spreizelement in Einführrichtung zunehmend geweitet, was einerseits zu einem Hintergriff im Aufnahmematerial und andererseits zur Verlagerung des grössten Spreizdruckes tief in das Innere der Aufnahmebohrung führt.

Durch eine grösste lichte Weite der Zentralöffnung von 0,4 bis 0,7 des Aussendurchmessers des ersten Spreizabschnittes wird eine derart grosse Aufweitung des ersten Spreizabschnittes erzielt, dass bei allen in Betracht kommenden Arten von Aufnahmematerialien ein ausreichender, zu hohen Verankerungswerten führender Hintergriff gewährleistet ist. Bei Verwendung einer Schraube wird die grösste lichte Weite der Zentralöffnung dem Kerndurchmesser der Schraube entsprechen. Durch die besagte Massrelation kann beispielsweise bei einem Aussendurchmesser des ersten Spreizabschnittes von 10 mm eine Aufweitung auf 17 mm erreicht werden.

Die wellenförmigen Längsschlitze sind zu den Längsschlitzen im ersten Spreizabschnitt in Umfangsrichtung vorzugsweise um 90° zueinander versetzt. Durch diese Versetzung kommt es auch zu einer um 90° versetzten Aufweitung der Spreizabschnitte und dadurch zu einer in Umfangsrichtung gleichmässig aufgeteilten Krafteinleitung in das Aufnahmematerial. Die Versetzung um 90° trägt zusätzlich zur Verwindungssteifigkeit des Spreizteiles bei.

Mit Vorteil verjüngt sich die Zentralöffnung in der lichten Weite auf Null. Dadurch wird in der einführrichtungsseitigen Zone des zweiten Spreizabschnittes maximale radiale Weitung und dadurch ein grösstmöglicher Eingriff in dem Aufnahmematerial erreicht.

Die Erfindung wird nachstehend anhand von Zeichnungen, die ein Ausführungsbeispiel wiedergeben, näher erläutert. Es zeigen:

Fig. 1 einen Kunststoff-Spreizdübel, teilweise im Längsschnitt, ungespreizt;

Fig. 2 einen Schnitt durch den Dübel nach Fig. 1, gemäss Schnittverlauf II-II;

Fig. 3 einen Schnitt durch den Dübel nach Fig. 1, gemäss Schnittverlauf III-III;

Fig. 4 den Dübel in gegenüber der Fig. 1 um 90° verdrehter Stellung, in aufgeweitetem Verwendungseinsatz.

Der Spreizdübel weist ein Spreizteil 1 und einen daran entgegen der Einführrichtung anschliessenden Hals 2 auf. Der Hals 2 ist von einer Zentralöffnung 3 durchsetzt. Das freie Ende des Halses 2 weist einen kegeligen Ringflansch 4 auf. Auf der im wesentlichen zylindrischen Aussenkontur des Halses 2 sitzen über den Umfang verteilt vier keilförmige Vorsprünge 5.

Das Spreizteil 1 setzt sich aus einem einführrichtungsseitigen ersten Spreizabschnitt 6 und aus einem an diesen entgegen der Einführrichtung anschliessenden zweiten Spreizabschnitt 7 zusammen. Die Länge l des ersten Spreizabschnittes 6 beträgt zumindest ein Drittel der Länge L des Spreizteiles 1. Zwischen den beiden Spreizabschnitten 6, 7 ist eine aussenseitig umlaufende Einschnürung 8 vorgesehen.

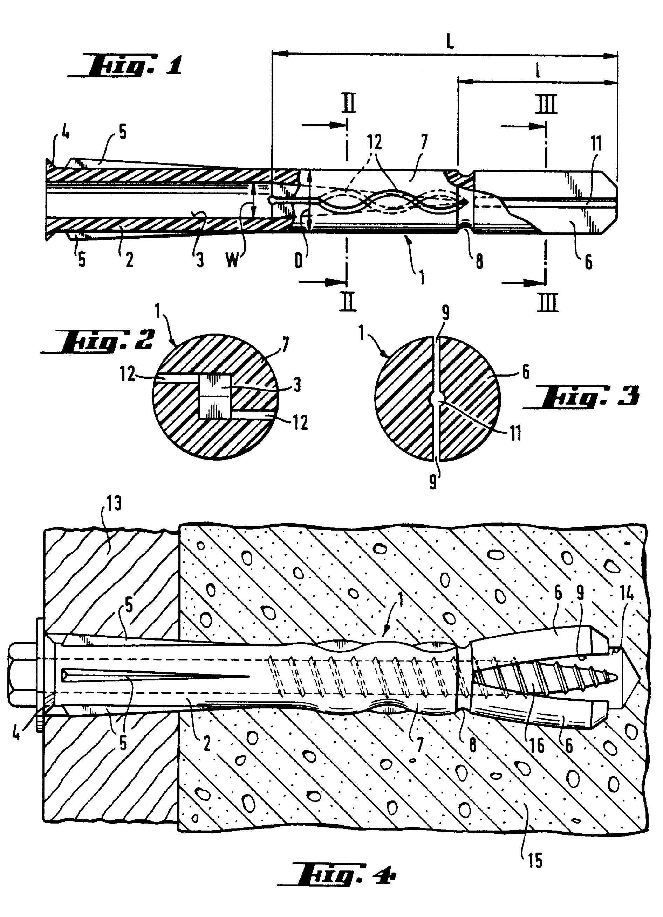

Der erste Spreizabschnitt 6 weist zwei gemeinsam in einer Ebene liegende, im Zentrum zusammenlaufende Längsschlitze 9 auf, die radial und in Einführrichtung offen sind, wie dies die Fig. 1 und 3 verdeutlichen. Entlang der Zentrumsachse des ersten Spreizabschnittes 6 erstrecken sich Auskehlungen 11.

Die Zentralöffnung 3 setzt sich in den zweiten Spreizabschnitt 7 fort und weist hier, wie die Fig. 2 zeigt, einen rechteckigen Querschnitt auf. Die Zentralöffnung 3 verjüngt sich im zweiten Spreizabschnitt 7 in Einführrichtung auf Null. Die grösste lichte Weite W der Zentralöffnung 3 entspricht dabei dem 0,4- bis 0,7-fachen des Aussendurchmessers D des ersten Spreizabschnittes 6. Im zweiten Spreizabschnitt 7 sind beidseitig der Zentralöffnung 3 einander gegenüberliegende Längsschlitze 12 vorhanden, welche wellenförmig ausgebildet sind und zueinander gegensinnig verlaufen.

Für den Verwendungseinsatz wird der Spreizdübel durch ein zu befestigendes Teil 13, beispielsweise eine Holzlatte, hindurch in eine Aufnahmebohrung 14 in weichem Material, wie Gasbeton 15, eingeführt. Der Ringflansch 4 legt sich dabei versenkt an dem Teil 13 fest. Die Vorsprünge 5 graben sich in das Teil 13 sowie in die Wandung der Aufnahmebohrung 14 ein und schaffen so eine das Einschrauben eines Spreizelementes 16 erlaubende Verdrehsicherung des Spreizdübels. Das Spreizelement 16 weitet durch Eingriff in die sich verjüngende Zentralöffnung 3 den zweiten Spreizabschnitt 7 in Einführrichtung zunehmend auf und tritt alsdann in den ersten Spreizabschnitt 6 ein. Die Längsschlitze 9 erlauben ein maulartiges Aufweiten des ersten Spreizabschnittes, wobei durch die Einschnürung 8 eine das Aufweiten erleichternde Gelenkstelle geschaffen ist. Die sich aufweitenden Hälften des ersten Spreizabschnittes 6 werden so unter Materialverdrängung radial in die Wandung der Aufnahmebohrung 14 formschlüssig eingedrückt. Die radiale Weitung des ersten Spreizabschnittes 6 erfolgt um 90° versetzt zu der radialen Weitung des zweiten Spreizabschnittes 7.

## Patentansprüche

1. Kunststoff-Spreizdübel, mit einem von einem Spreizelement (16) aufweitbaren Spreizteil (1), das aus einem einführrichtungsseitigen, in Einführrichtung zwei offene Längsschlitze (9) aufweisenden ersten Spreizabschnitt (6) mit zylindrischer Aussenkontur und einem entgegen der Einführrichtung daran anschliessenden zweiten Spreizabschnitt (7), der beidseitig einer entgegen der Einführrichtung offenen Zentralöffnung (3) einander gegenüberliegende, wellenförmig und zueinander gegensinnig verlaufende Längsschlitze (12) aufweist, besteht, wobei zwischen den Spreizabschnitten (6, 7) eine umlaufende, nach aussen offene Einschnürung (8) vorgesehen ist, **dadurch gekennzeichnet**, dass die Länge (l) des ersten Spreizabschnittes (6) mindestens einem Drittel der Länge (L) des Spreizteiles (1) entspricht, die wellenförmigen Längsschlitze (12) zu den Längsschlitzen (9) im ersten Spreizabschnitt (6) in Umfangsrichtung versetzt sind und dass die Zentralöffnung (3) sich im zweiten Spreizabschnitt (7) in Einführrichtung verjüngt, wobei die grösste lichte Weite (W) der Zentralöffnung (3) dem 0,4- bis 0,7-fachen des Aussendurchmessers (D) des ersten Spreizabschnittes (6) entspricht.

2. Spreizdübel nach Anspruch 1, dadurch gekennzeichnet, dass die wellenförmigen Längsschlitze (12) zu den Längsschlitzen (9) im ersten Spreizabschnitt (6) in Umfangsrichtung um 90° versetzt sind.

3. Spreizdübel nach einem der Ansprüche 1 bis 3, dadurch gekennzeichnet, dass die Zentralöffnung (3) sich in der lichten Weite auf Null verjüngt.

## Claims

1. Plastic expanding dowel, having a spreading portion (1) which is spread by a spreading element (16), comprising a first spreading section, having on the insert side two longitudinal slots (9) open in the insert direction and being of cylindrical outer contour, and adjacent thereto in opposition to the insert direction and second spreading section (7), having oppositely located waveshaped longitudinal slots (12) on both sides of a central opening (3) which is open in opposition to the insert direction, and extending in opposite direction to each other, in which respect a peripheral, outwardly open constriction (8) is provided between the spreading sections (6, 7), **characterised in that** the length (1) of the first spreading section (6) is at least one third of the length (L) of the spreading portion (1), that the waveshaped longitudinal slots (12) are peripherally transposed relative to the longitudinal slots (9) in the first spreading section (6), and that the central opening (3) narrows towards the insert direction in the second spreading section (7), in which respect the largest clearance (W) of the central opening (3) equals between 0.4 and 0.7 times the outside diameter (D) of the first spreading section (6).

2. Expanding dowel according to claim 1, characterised in that the waveshapes longitudinal slots (12) are transposed by 90° in the peripheral direction relative to the longitudinal slots (9) in the first spreading section (6).

3. Expanding dowel according to one of the claims 1 to 3, characterised in that the central opening (3) narrows to zero in the clearance.

## Revendications

1. Cheville à expansion en matière plastique, comprenant un élément expansible (1) pouvant être écarté par un élément d'écartement (16), qui se compose d'une première section expansible (6) avec un contour extérieur cylindrique située du côté introduction et présentant deux fentes longitudinales (9) ouvertes dans la direction d'introduction, et une seconde section expansible (7) qui y fait suite dans le sens opposé à la direction d'introduction et comporte, de part et d'autre d'une ouverture centrale (3) ouverte dans le sens opposé à la direction d'introduction, des fentes longitudinales (12) disposées en face l'une de l'autre et s'étendant de manière ondulée et en sens inverse l'une par rapport à l'autre, une gorge circulaire (8) ouverte vers l'extérieur étant prévue entre les sections expansibles (6, 7), **caractérisée en ce que** la longueur (l) de la première section expansible (6) correspond au moins à un tiers de la longueur (L) de l'élément expansible (1), que les fentes longitudinales (12) ondulées sont décalées dans le sens circonférentiel par rapport aux fentes longitudinales (9) dans la première section expansible (6), et que l'ouverture centrale (3) se rétrécit dans la seconde section expansible (7) dans la direction d'introduction, le diamètre intérieur maximum (W) de l'ouverture centrale (3) correspondant à 0,4 à 0,7 fois le diamètre extérieur (D) de la première section expansible (6).

2. Cheville à expansion selon la revendication 1, caractérisée en ce que les fentes longitudinales (12) ondulées sont décalées dans le sens circonférentiel de 90° par rapport aux fentes longitudinales (9) dans la première section expansible (6).

3. Cheville à expansion selon l'une des revendications 1 ou 2, caractérisée en ce que le diamètre intérieur de l'ouverture centrale (3) diminue jusqu'à zéro.

Fig. 1

Fig. 2

Fig. 3

Fig. 4